# FASCICULE DE BREVET EUROPEEN

(11) **EP 3 077 223 B1**
(45) Date de publication et mention de la délivrance du brevet: **13.09.2017**
(21) Numéro de dépôt: 14802922.6
(22) Date de dépôt: 27.11.2014
(51) Int. Cl.: B60C 11/12, B60C 11/03

(54) **BANDE DE ROULEMENT EVOLUTIVE POUR PNEU**
ENTWICKLUNGSFÄHIGER REIFENLAUFSTREIFEN
EVOLVING TIRE TREAD

(30) Priorité: 02.12.2013 FR 1361934
(43) Date de publication de la demande: 12.10.2016
(73) Titulaire: Compagnie Générale des Etablissements Michelin, 63000 Clermont-Ferrand (FR)
(72) Inventeur: CAMBON, Stéphanie, 63040 Clermont-Ferrand Cedex 9 (FR); BARDIN, Damien, 63040 Clermont-Ferrand Cedex 9 (FR); LEJEUNE, Jonathan, 63040 Clermont-Ferrand Cedex 9 (FR)
(74) Mandataire: Diernaz, Christian
(86) Numéro de dépôt international: PCT/EP2014/075838
(87) Numéro de publication internationale: WO 2015/082310

(56) Documents cités:
- WO-A1-2011/039194
- WO-A1-2012/130735
- WO-A1-2013/066309

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau présente sur la chaussée par temps de pluie sont rendues pérennes, ces bandes de roulement présentant des performances améliorées en forme d'usure.

### ÉTAT DE LA TECHNIQUE

De façon connue, des conditions de roulage par temps de pluie requièrent une élimination la plus rapide possible de l'eau dans la région de contact de chaque pneu avec la chaussée afin d'assurer un contact de la bande de roulement avec la chaussée. L'eau qui n'est pas repoussée sur l'avant du pneu s'écoule en partie dans les rainures et incisions formées dans la bande de roulement du pneu que ce soit dans la direction circonférentielle ou transversale.

Une découpure désigne de manière générique soit une rainure soit une incision et correspond à l'espace délimité par des parois de matière se faisant face et distantes l'une de l'autre d'une distance non nulle (dite "largeur de la découpure").

Par rainure, on entend ici une découpure s'ouvrant sur une surface de roulement destinée à être en contact avec la chaussée, cette découpure ayant une largeur moyenne appropriée pour que les parois de matière qui le délimitent ne soient jamais en contact l'une sur l'autre dans les conditions normales d'usage du pneu. Les rainures peuvent avoir toute forme vue en section transversale et en trace sur la surface de roulement et être orientées selon une direction quelconque. Par trace d'une rainure sur la surface de roulement, on entend ici la ligne moyenne géométrique suivie par les arêtes formées par ladite rainure sur ladite surface.

Par incision, on entend ici une fente mince ayant une largeur moyenne faible et telle que, sous certaines conditions de sollicitation, les parois de matière la délimitant puissent venir, au moins partiellement, en contact l'une sur l'autre lors du passage dans la région de contact avec la route.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande. Par ailleurs on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu.

La réalisation d'une pluralité de rainures sur une bande de roulement a pour inconvénient de réduire la quantité de matière de bande pour une largeur donnée de bande et par voie de conséquence de réduire la durée d'utilisation du pneu liée à une augmentation de la vitesse d'usure.

Par ailleurs, les rainures génèrent une diminution des rigidités de compression et de cisaillement puisque ces rainures délimitent des portions de matière plus sensibles à la déformation comparativement aux portions délimitées par des incisions. En effet, dans le cas d'incisions les parois de matière délimitant ces incisions peuvent venir en contact les unes sur les autres au moins dans le passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). Par ailleurs on constate une augmentation de la résistance au roulement et donc de la consommation des véhicules équipés de tels pneus, résultant d'une augmentation des pertes hystérétiques liées aux cycles de déformations de la matière composant la bande de roulement.

Quelle que soit la catégorie de pneu (c'est-à-dire que ce soit un pneu équipant un véhicule de tourisme ou un véhicule destiné à porter de lourdes charges), la bande de roulement doit présenter une performance en drainage de l'eau présente sur la route qui est toujours au dessus d'une performance minimale dite performance de sécurité. En conséquence et compte tenu de l'usure progressive de la bande de roulement qui voit se réduire progressivement les sections transversales des rainures, il est usuel de réaliser des rainures débouchant sur la surface de roulement à l'état neuf et se prolongeant dans l'épaisseur de la bande jusqu'à au moins un niveau qui correspond à une limite nécessitant le retrait de la bande. Ceci a pour inconvénient d'abaisser très sensiblement les rigidités de ladite bande (à la fois la rigidité de compression et les rigidités de cisaillement).

Il a été proposé dans le document publié sous le numéro WO 2011/039194, qui divulgue une bande de roulement selon le préambule de la revendication 1, de former dans une bande de roulement des rainures ayant la particularité de s'ouvrir de manière discontinue sur la surface de roulement de la bande à l'état neuf. Cette rainure peut être considérée comme étant ondulante dans l'épaisseur de la bande en s'ouvrant régulièrement sur la surface de roulement. Cette rainure comprend une succession de parties ouvertes (cavités ouvertes) c'est-à-dire s'ouvrant sur la surface de roulement à l'état neuf et de parties fermées (cavités fermées) c'est-à-dire ne s'ouvrant pas directement sur cette surface de roulement à l'état neuf. Ces dernières parties dites fermées sont destinées à former de nouvelles rainures s'ouvrant sur une surface de roulement après une usure partielle de la bande. Une rainure ondulante peut être formée dans la direction circonférentielle ou dans toute autre direction dans une bande de roulement. Comme décrit dans le document WO 2011/039194 une rainure ondulante est continue à l'état initial (correspondant à l'état neuf de la bande après moulage), ce qui permet d'assurer, en roulage sur chaussée revêtue d'eau, une capture de l'eau lors du passage dans le contact avec la chaussée, l'eau ainsi captée circulant dans la rainure ondulante sous la surface de roulement. Ce même document décrit la possibilité, à l'image des dessins de sculpture de l'état de la technique, de réaliser des connexions entre au moins deux rainures ondulantes.

### BREF EXPOSE DE L'INVENTION

La présente invention s'attache à organiser de façon performante ce type de rainures ondulantes dans une bande de roulement pour pneu de véhicule poids lourd. En effet, il est connu qu'une des performances faisant l'objet de travaux d'amélioration continue concerne l'obtention de conditions ne développant pas d'usure irrégulière ou à tout le moins retardant le plus possible l'apparition de ce genre d'usure. Par usure irrégulière, on entend dans le présent document, l'apparition d'une usure plus prononcée sur une partie axiale de la bande de roulement. À l'opposé, une usure régulière - recherchée par la personne du métier - affecte toute la largeur de la bande de roulement de manière uniforme ou sensiblement uniforme jusqu'au retrait du pneu pour un renouvellement de sa bande de roulement ou pour une mise en place d'un pneu neuf.

L'objet de l'invention est de proposer une bande de roulement pourvue de rainures et d'incisions permettant d'avoir une performance égale ou supérieure à la performance minimale de sécurité en drainage et cela quel que soit le niveau d'usure de cette bande tout en limitant l'usure irrégulière tout en réduisant les volumes de creux au juste nécessaire.

À cet effet, l'invention a pour objet une bande de roulement pour pneu de véhicule poids lourd d'épaisseur totale E et de largeur W, cette bande de roulement ayant une surface de roulement destinée à venir en contact avec une chaussée pendant le roulage, cette bande comprenant :
- au moins une première partie axiale comprenant au moins une rainure ondulante dans l'épaisseur de la bande et continue selon une première direction et une pluralité de rainures ondulantes dans l'épaisseur de la bande et continues selon une deuxième direction, chaque rainure ondulante comprenant une pluralité de parties ouvertes sur la surface de roulement à l'état neuf et une pluralité de parties fermées sous la surface de roulement, les parties fermées étant reliées aux parties ouvertes et disposés en alternance (c'est-à-dire qu'une partie ouverte est encadré par deux parties fermées), chaque partie fermée étant espacée de la surface de roulement par un pont de gomme, les rainures ondulantes selon la deuxième direction étant connectées à au moins une rainure ondulante selon la première direction,
- au moins une deuxième partie axiale de la bande comprenant au moins une rainure ondulante dans l'épaisseur de la bande et continue selon une troisième direction et une pluralité de rainures ondulantes dans l'épaisseur de la bande et continues selon une quatrième direction, chaque rainure ondulante comprenant une pluralité de parties ouvertes sur la surface de roulement à l'état neuf et une pluralité de parties fermées, les parties fermées étant reliées aux parties ouvertes et disposées en alternance (c'est-à-dire qu'une partie ouverte est encadrée par deux parties fermées), chaque partie fermée étant espacée de la surface de roulement à l'état neuf par un pont de gomme, les rainures ondulantes de cette deuxième partie axiale de bande orientées selon la quatrième direction étant connectées à au moins une rainure ondulante selon la troisième direction.

Cette bande de roulement est telle que :
- à l'état neuf, les parties ouvertes sur la surface de roulement de la première partie axiale sont reliées les unes aux autres pour former un réseau de surface continu et telle que les parties ouvertes sur la surface de roulement de la deuxième partie sont disjointes les unes des autres,
- et telle que, à partir d'une usure partielle les parties ouvertes sur une nouvelle surface de roulement de la deuxième partie axiale sont reliées les unes aux autres pour former un un réseau de surface continu et en ce que les parties ouvertes sur la nouvelle surface de roulement de la première partie sont disjointes les unes des autres.

Un pont de gomme correspond à la partie de la bande de roulement radialement à l'extérieur de chaque tronçon des rainures ondulantes ; ce pont de gomme peut être continu ou coupé par une incision dont on sait qu'elle se ferme au passage dans le contact.

Le terme « rainure ondulante » est interprété dans la présente description comme signifiant zigzagant (c'est-à-dire comportant une série de segments) ou encore oscillant (à l'image d'une sinusoïde) entre un premier niveau correspondant à la surface de roulement à l'état neuf et un autre niveau dans l'épaisseur de la bande. À ces ondulations dans la direction de l'épaisseur de la bande, il peut être en outre superposé des ondulations dans une direction perpendiculaire à la direction de l'épaisseur de la bande.

Chaque cavité ou rainure continue et ondulante dans l'épaisseur de la bande a une section transversale moyenne, la surface de cette section pouvant être constante ou varier autour d'une valeur moyenne afin d'assurer un écoulement de fluide dans ladite rainure.

Par rainures connectées entre elles, on entend que la circulation de fluide à l'intérieur d'une rainure connectée à une autre rainure peut interférer avec la circulation de fluide à l'intérieur de l'autre rainure.

Grâce à cette structure de bande de roulement, on obtient un volume de creux approprié pour réaliser un drainage satisfaisant à l'état neuf et cela quel que soit le niveau de l'usure tout en limitant la diminution de rigidité de la bande de roulement à l'état neuf, ce volume de creux étant formé par les parties ouvertes (dites aussi : cavités externes) dans un premier temps d'utilisation puis par les parties fermées (dites aussi : cavités internes) dans un autre temps d'utilisation, ces cavités internes et externes étant reliées entre elles afin de permettre la circulation de liquide dans chaque rainure. En créant à l'état neuf un premier réseau continu et ouvert sur la surface de roulement on renforce le pouvoir drainant de la sculpture de la bande de roulement. En formant, dans au moins une autre partie de la bande de roulement, un autre réseau après une usure partielle on assure ainsi une usure plus régulière, les sollicitations dans la bande étant réparties de manière différente entre l'état neuf et un état partiellement usé.

De façon préférentielle, pour certains types de pneus selon l'invention, il est avantageux que la bande de roulement soit telle que la première partie axiale corresponde à la partie médiane de la bande de roulement et que la deuxième partie axiale corresponde aux parties de la bande de roulement situées de part et d'autre de la partie médiane. Cette partie médiane s'étend de part et d'autre du plan médian équatorial, sur une largeur égale à au moins 15% et au plus 85% de la largeur totale W de la bande.

Dans une autre variante préférentielle et pour d'autres types de pneus selon l'invention, la bande de roulement est telle que la première zone est formée sur chaque épaule du pneu sur une largeur égale à au moins 15% et au plus 85% de la largeur totale W de la bande et encore plus avantageusement entre 30% et 65%.

Dans une variante de l'invention, la bande comprend en outre une pluralité d'incisions s'ouvrant sur la surface de roulement de la bande à l'état neuf, chacune desdites incisions s'ouvrant dans deux parties ouvertes consécutives d'une même rainure ondulante et dans une partie fermée de la même rainure ondulante, cette partie fermée étant située entre lesdites deux parties ouvertes. Cette variante génère un nombre important d'arêtes de matière utiles pour atteindre une excellente performance en motricité.

Pour maintenir un niveau satisfaisant de rigidité de la bande de roulement selon l'invention il est avantageux que les incisions prolongeant les cavités internes et externes soient pourvues de moyens de blocage mécanique des déplacements relatifs des parois en vis-à-vis délimitant lesdites incisions. De tels moyens peuvent prendre la forme d'ondulation des parois en vis-à-vis ou encore de reliefs moulés sur lesdites parois et appropriés pour coopérer ensemble. Ainsi outre le mécanisme usuel de fermeture des incisions lors du passage dans le contact, il est possible d'assurer un blocage mécanique des parois délimitant les incisions.

L'invention concerne également un pneu pourvu d'une bande de roulement définie selon l'invention, cette bande de roulement surmontant radialement à l'extérieur une enveloppe de pneu constituée d'une armature de carcasse et d'une armature de sommet. La bande de roulement de ce pneu est réalisée comme l'une des variantes précédentes, certaines dimensions des rainures étant liées à une longueur moyenne de la surface de contact de la bande avec la chaussée obtenue dans les conditions d'usage du pneu.

Il est avantageux qu'il y ait, pour chaque rainure orientée circonférentiellement et formée de parties s'ouvrant sur la surface de roulement et de parties fermées sous-jacentes à la surface de roulement, au moins une partie ouverte sur la surface de roulement qui est en permanence dans le contact afin de permettre un bon drainage. Si on note **T** la longueur moyenne de la surface de contact avec la chaussée dans les conditions nominales d'usage du pneu pourvu d'une bande de roulement selon l'invention (cette longueur moyenne étant obtenue en divisant l'aire totale délimitée par le contour externe de cette surface de contact par la largeur W de ladite surface), il est encore plus préférentiel que la longueur moyenne des parties ouvertes à l'état neuf des rainures circonférentielles soit comprise entre 25% et 75% de la longueur moyenne **T** de la surface de contact.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue partielle de la surface de roulement d'une bande de roulement d'un pneu à l'état neuf selon l'invention ;
Les figures 2a, 2b, 2c, 2d montrent des coupes prises sur la figure 1 selon des plans de coupe repérés par les lignes IIa-IIa, IIb-IIb, IIc-IIc, IId-IId respectivement ;
La figure 3 montre une vue de la surface de roulement après une usure partielle de la bande de roulement montrée avec la figure 1 ;
La figure 4 montre une vue en coupe selon une ligne IV-IV prise sur la bande de roulement après usure partielle telle que montrée avec la figure 3.

### DESCRIPTION DES FIGURES

Pour faciliter la lecture des figures, des signes de référence identiques sont employés pour la description de variantes de l'invention dès lors que ces signes de référence renvoient à des éléments d'une même nature que cette nature soit structurelle ou bien fonctionnelle.

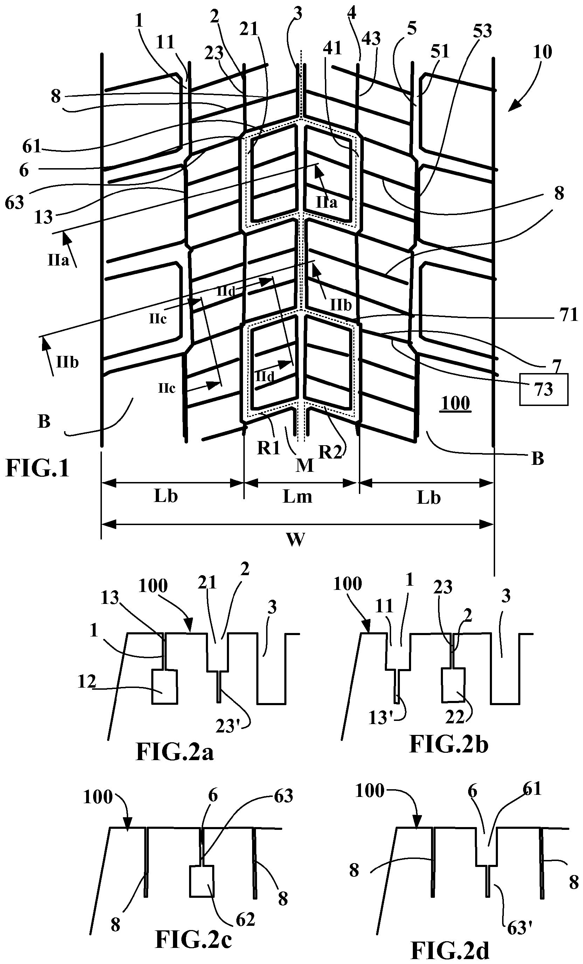

La figure 1 montre une vue partielle de la surface de roulement d'une bande de roulement d'un pneu à l'état neuf selon l'invention.

Cette figure 1 montre une partie d'une bande de roulement 10 à l'état neuf destinée à équiper un pneu pour véhicule poids lourd de dimension 315/70R22.5.

Cette bande 10 a une surface de roulement 100 destinée à venir en contact avec la chaussée pendant le roulage sur une largeur W égale à 290 mm.

Cette bande de roulement est pourvue de cinq rainures 1, 2, 3, 4, 5 d'orientation générale circonférentielle. Une rainure circonférentielle médiane 3 est localisée sur le plan médian de la bande de roulement ; cette rainure médiane 3 a une largeur moyenne égale à 6 mm. De part et d'autre de cette rainure médiane 3 on distingue deux rainures ondulantes 2, 4 dans l'épaisseur de la bande et continues dans la direction circonférentielle, ces rainures ondulantes présentant la particularité de s'ouvrir par intermittence sur la surface de roulement à l'état neuf par des parties ouvertes 21,41 respectivement. Ces parties de rainures s'ouvrant sur la surface de roulement à l'état neuf se prolongent dans l'épaisseur de la bande par des parties fermées 22, 42 respectivement sous-jacentes à la surface de roulement, afin d'assurer une continuité de la circulation de fluide dans chaque rainure. Ces deux rainures ondulantes 2, 4 délimitent axialement entre elles une partie médiane M de la bande ; la largeur Lm de cette partie médiane correspond dans le cas présent à 30 % de la largeur totale W de la bande de roulement.

Axialement à l'extérieur de la partie médiane M, on distingue des parties latérales B de largeur Lb égale dans le cas présent à 35 % de la largeur totale W. Sur chaque partie latérale B il est moulé deux rainures ondulantes 1, 5 dans l'épaisseur de la bande et continues dans la direction circonférentielle. Ces rainures ondulantes 1, 5 présentent la particularité de s'ouvrir par intermittence sur la surface de roulement à l'état neuf par des parties ouvertes 11, 51 respectivement. Les parties ouvertes 11, 51 de ces rainures ondulantes 1, 5 des parties latérales B sont circonférentiellement décalées par rapport aux parties ouvertes 21, 41 des rainures ondulantes 2, 4 délimitant la partie médiane.

En outre on distingue une pluralité de découpures obliques de part et d'autre du plan médian. Ces découpures oblique forment un motif en chevron conférant une directionnalité au dessin de la sculpture de la bande de roulement. Préférentiellement les découpures obliques font un angle différent de zéro et encore plus préférentiellement au moins égal à 10 degrés, cet angle étant mesuré avec la direction axiale ou transversale. Dans le cas présent l'angle de ces découpures est égal à 15 degrés avec la direction transversale.

Parmi ces découpures obliques on trouve des rainures obliques ondulantes 6, 7 dans l'épaisseur de la bande de roulement. Ces rainures obliques ondulantes 6, 7 s'étendent à partir du plan médian jusqu'aux rainures ondulantes circonférentielles 1, 5 axialement les plus à l'extérieur et croisent les rainures ondulantes intermédiaires 2, 4.

Ces rainures obliques ondulantes 6, 7 ont une largeur moyenne égale à 6 mm et s'étendent dans l'épaisseur de la bande de roulement sur une hauteur totale égale à 13 mm. Ces rainures obliques ondulantes 6, 7 comportent chacune une partie ouverte 61, 71 sur la surface de roulement à l'état neuf ayant une profondeur égale à 7 mm ; chaque partie ouverte 61, 71 se prolonge dans l'épaisseur et sous la surface de roulement de la bande à l'état neuf par une partie fermée 62, 72 respectivement, ces parties fermées ayant une hauteur égale à 6 mm. Les rainures obliques ondulantes 6, 7 sont en phase les unes avec les autres de part et d'autre du plan médian.

Comme on le voit sur la figure 1, les connexions établies entre les différentes rainures ondulantes circonférentielles 2, 4 et les rainures obliques ondulantes 6, 7 permettent de réaliser deux réseaux ouverts sur la surface de roulement à l'état neuf, chacun de ces réseaux ayant une géométrie en zigzag. Sur cette figure 1 on a marqué ces réseaux par des lignes R1 et R2 en traits pointillés.

En complément on distingue une pluralité d'incisions de même orientation que les rainures obliques ondulantes. Entre deux rainures obliques ondulantes 6, 7 sont formées deux incisions s'ouvrant sur la surface de roulement à l'état neuf et se prolongeant jusqu'à la profondeur de la rainure circonférentielle 3 formée sur le plan médian.

Toutes les rainures ondulantes, qu'elles soient circonférentielles ou obliques, décrites pour cette variante de l'invention sont prolongées - radialement vers l'extérieur des parties fermées sous-jacentes à la surface de roulement - par des incisions s'ouvrant à la fois dans ces parties fermées et sur la surface de roulement à l'état neuf. Ces incisions se prolongent aussi jusqu'aux parties ouvertes sur la surface de roulement à l'état neuf.

Comme on peut le voir sur la figure 1, les parties ouvertes sur la surface de roulement à l'état neuf de la partie médiane forment avec la rainure circonférentielle médiane un réseau de surface continu sur la surface de roulement à l'état neuf.

À l'état neuf, ce réseau de drainage en surface est complété, à la fois sur la partie médiane et sur chaque partie latérale, par un réseau de drainage dans l'épaisseur de la bande de roulement grâce à la présence des rainures circonférentielles ondulantes dans l'épaisseur.

Les figures 2a, 2b, 2c, 2d montrent des coupes prises sur la figure 1 selon des plans de coupe dont les traces sur la figure 1 sont repérées par les lignes IIa-IIa, IIb-IIb, IIc-IIc, IId-IId respectivement.

Les figures 2a, 2b montrent en coupe les rainures circonférentielles ondulantes à l'état neuf. On distingue sur la figure 2a, la rainure circonférentielle 3 formée sur le plan médian ainsi que les rainures circonférentielles ondulantes 1 et 2. On voit sur cette figure la partie fermée 12 de la rainure ondulante 1 prolongée vers la surface de roulement par une incision 13. La partie fermée 12 de la rainure ondulante 1 s'étend dans la bande de roulement jusqu'à une profondeur égale à la profondeur de la rainure médiane 3. En outre on voit la partie ouverte 21 sur la surface de roulement 100 de la rainure ondulante 2 qui se prolonge vers l'intérieur par une incision 23'.

On distingue sur la figure 2b, la rainure circonférentielle 3 formée sur le plan médian ainsi que les rainures circonférentielles ondulantes 1 et 2. On voit sur cette figure la partie ouverte 11 de la rainure ondulante 1 sur la surface de roulement 100 à l'état neuf, cette partie ouverte 11 se prolongeant vers l'intérieur par une incision 13'. On voit également la partie fermée 22 de la rainure ondulante 2 prolongée vers la surface de roulement par une incision 23.

Les figures 2c, 2d montrent en coupes les rainures obliques ondulantes 6. Ce qui est montré pour ces rainures obliques ondulantes 6 s'applique également aux rainures obliques ondulantes 7 formées sur l'autre côté de la bande de roulement par rapport au plan médian.

On distingue sur la figure 2c, des incisions 8 formées de part et d'autre d'une rainure oblique ondulante 6 dont on voit la partie fermée 62 prolongée radialement vers la surface de roulement 100 à l'état neuf par une incision 63.

On distingue sur la figure 2d, la partie ouverte 61 de la rainure oblique ondulante 6 prolongée radialement vers l'intérieur par une incision 63'.

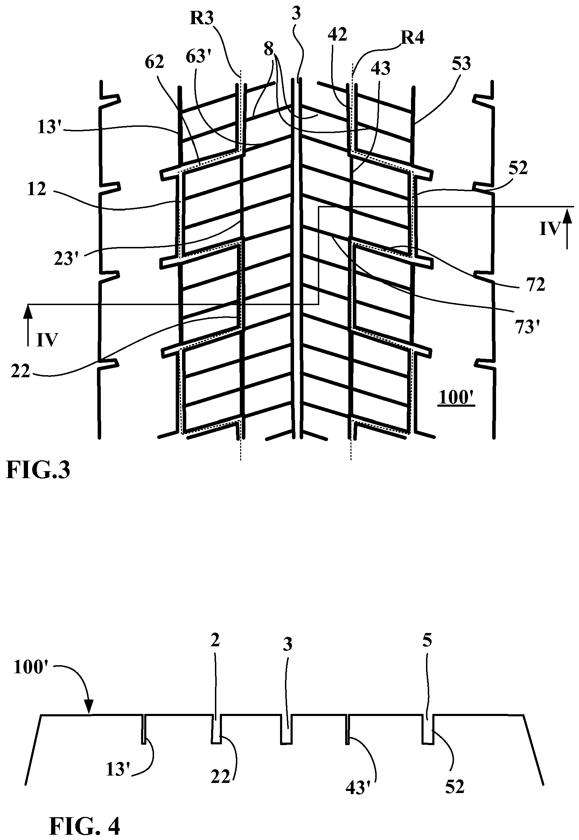

La figure 3 montre une vue de la surface de roulement 100' après une usure partielle égale dans le cas présent à 55 % de l'épaisseur totale à user de la bande de roulement montrée avec la figure 1 à l'état neuf.

Après usure partielle, le dessin de sculpture de la bande de roulement évolue pour adopter une nouvelle géométrie, les parties fermées des rainures ondulantes s'ouvrant sur la surface de roulement pour former des parties ouvertes de rainures.

Pour maintenir une longueur d'arêtes efficaces, les parties des rainures ondulantes initialement présentes sur la bande à l'état neuf sont prolongées à l'intérieur par des incisions et cela quelle que soit la rainure ondulante considérée.

Sur chaque partie d'épaule, il est formé un réseau continu de rainures, ce réseau ouvert sur la surface de roulement 100' se combine avec la rainure médiane circonférentielle 3 pour assurer le drainage de l'eau présente sur la chaussée par temps de pluie. Lesdits réseaux sont représentés par des lignes en traits pointillés R3 et R4.

Le réseau de surface R3 combine les parties initialement fermées 12, 22 sous-jacentes à la surface de roulement à l'état neuf des rainures ondulantes circonférentielles 1 et 2 avec les parties fermées 62 sous-jacentes des rainures obliques ondulantes 6.

Le réseau de surface R4 combine les parties initialement fermées 42, 52 sous-jacentes à la surface de roulement à l'état neuf des rainures ondulantes circonférentielles 4 et 5 avec les parties fermées 72 sous-jacentes des rainures obliques ondulantes 7.

La figure 4 montre une vue en coupe selon une ligne IV-IV prise sur la bande de roulement après usure partielle telle que montrée avec la figure 3. Sur la nouvelle surface de roulement 100' s'ouvrent des incisions 13', 43' et les parties initialement fermées 22 et 52 des rainures ondulantes 2 et 5 respectivement. Dans la partie médiane demeure la rainure circonférentielle 3.

Grâce à cette modification des réseaux de drainage de surface, il est possible de limiter l'apparition d'usures irrégulières tout en ayant un drainage approprié tout au long de la vie d'usage de la bande de roulement selon l'invention. En procédant de la sorte, la bande de roulement selon l'invention permet d'assurer une usure régulière tout en ajustant plus précisément le volume de creux des différentes découpures afin d'affecter le moins possible les rigidités de la bande.

Une bande de roulement selon l'invention peut être mise en oeuvre pour un pneu neuf ou encore à l'occasion du renouvellement de la bande de roulement d'un pneu usagé.

Dans une autre variante non montrée ici, les dispositions de la figure 2 sont appliquées à une bande de roulement à l'état neuf tandis que les dispositions de la figure 1 correspondent à celle d'une même bande après une usure partielle. Ce qui signifie qu'à l'état neuf le réseau de drainage de surface est présent sur les parties latérales de la bande de roulement à l'image de ce qui est montré avec la figure 3 pour évoluer avec l'usure et se situer sur la partie médiane à l'image de ce qui est montré avec la figure 1. Dans un tel cas, à l'état neuf la première partie axiale est formée sur l'une au moins des parties axialement les plus éloignées du plan médian de la bande de roulement à l'état neuf tandis que la deuxième partie axiale est formée sur la partie médiane de la bande de roulement.

Avantageusement le niveau d'usure partielle à partir duquel le changement de réseau s'effectue est compris entre 10% et 85% de l'épaisseur de la bande à user et encore plus avantageusement entre 30% et 65%.

Ce qui a été montré et décrit avec deux niveaux d'usure, à savoir un premier niveau entre la surface de roulement à l'état neuf et le fond des parties de rainure s'ouvrant sur ladite surface de roulement et un second niveau voyant apparaître de nouvelles parties de rainure, peut bien entendu être aisément généralisé à la présence de plus de deux niveaux.

L'invention n'est pas limitée aux exemples décrits et diverses modifications peuvent y être apportées sans sortir du cadre tel que défini par les revendications. Notamment, les cavités internes ou parties fermées de différentes rainures ondulantes peuvent être situées à des niveaux différents dans l'épaisseur d'une bande.

## Revendications

1. - Bande de roulement (10) pour pneu de véhicule poids lourd de largeur W, cette bande de roulement ayant à l'état neuf une surface de roulement (100) destinée à venir en contact avec une chaussée, cette bande comprenant :
- sur au moins une première partie axiale (M) de la bande au moins une rainure ondulante (2, 4) dans l'épaisseur de la bande et continue selon une première direction et une pluralité de rainures ondulantes (6, 7) dans l'épaisseur de la bande et continues selon une deuxième direction, chacune de ces rainures ondulantes continues s'étendant entre un premier niveau correspondant à la surface de roulement à l'état neuf et un autre niveau dans l'épaisseur de la bande, ces rainures ondulantes comprenant une pluralité de parties ouvertes (21, 41, 61, 71) sur la surface de roulement (100) à l'état neuf et une pluralité de parties fermées (22, 42, 62, 72) sous-jacentes à la surface de roulement (100), les parties fermées étant reliées aux parties ouvertes et disposées en alternance, chaque partie fermée étant espacée de la surface de roulement à l'état neuf par un pont de gomme, les rainures ondulantes (6, 7) selon la deuxième direction étant connectées à au moins une rainure ondulante (2, 4) selon la première direction,
- sur au moins une deuxième partie axiale (B) de la bande au moins une rainure ondulante (1, 5) dans l'épaisseur de la bande et continue selon une troisième direction et une pluralité de rainures ondulantes (6, 7) dans l'épaisseur de la bande et continues selon une quatrième direction, chaque rainure ondulante comprenant une pluralité de parties ouvertes sur la surface de roulement (100) à l'état neuf et une pluralité de parties fermées, les parties fermées étant reliées aux parties ouvertes, ces parties ouvertes et fermées étant disposés en alternance, chaque partie fermée étant espacé de la surface de roulement par un pont de gomme, les rainures ondulantes (6, 7) de cette deuxième partie axiale (B) de bande orientées selon la quatrième direction étant connectées à au moins une rainure ondulante (1 , 5) selon la troisième direction, cette bande de roulement (10) étant **caractérisée en ce que** :
- à l'état neuf, les parties ouvertes sur la surface de roulement de la première partie axiale (M) sont reliées les unes aux autres pour former un réseau de surface continu et **en ce que** les parties ouvertes sur la surface de roulement de la deuxième partie axiale (B) sont disjoints les uns des autres,
- et **en ce que** à partir d'une usure partielle les parties ouvertes sur une nouvelle surface de roulement (100') de la deuxième partie axiale (B) sont reliées les unes aux autres pour former un réseau de surface continu et **en ce que** les parties ouvertes sur la nouvelle surface de roulement (100') de la première partie axiale (M) sont disjoints les unes des autres.

2. - Bande de roulement (10) selon la revendication 1 **caractérisée en ce que** la première partie axiale (M) est formée sur la partie médiane de la bande de roulement à l'état neuf et **en ce que** la deuxième partie axiale correspond aux parties de la bande de roulement situées de part et d'autre de la partie médiane.

3. - Bande de roulement (10) selon la revendication 2 **caractérisée en ce que** la largeur de la partie médiane (M) est comprise entre 15 % et 85 % de la largeur W de la bande de roulement, et encore plus avantageusement entre 30% et 65%.

4. - Bande de roulement (10) selon la revendication 1 **caractérisée en ce qu'**à l'état neuf la première partie axiale est formée sur l'une au moins des parties axialement les plus éloignées du plan médian de la bande de roulement à l'état neuf et **en ce que** la deuxième partie axiale est formée sur la partie médiane de la bande de roulement.

5. - Bande de roulement selon l'une quelconque des revendications 1 à 3 **caractérisée en ce que** les parties latérales (B) comportent une pluralité d'incisions de même orientation que les rainures obliques ondulantes (6, 7), cette orientation étant au moins égale à 10 degrés.

6. - Pneu pourvu d'une bande de roulement selon l'une quelconque des revendications 1 à 5, ce pneu étant **caractérisé en ce que** la longueur moyenne des parties ouvertes des rainures ondulantes circonférentielle sur la surface de roulement à l'état neuf est comprise entre 25% et 75% de la longueur moyenne **T** de la surface de contact du pneu obtenue dans les conditions d'usage du pneu.

## Patentansprüche

1. Laufstreifen (10) für Schwerlastwagenreifen der Breite W, wobei dieser Laufstreifen im neuen Zustand eine Lauffläche (100) aufweist, die dazu bestimmt ist, mit einer Fahrbahn in Kontakt zu kommen, wobei dieser Streifen umfasst:
- auf wenigstens einem ersten axialen Teil (M) des Streifens wenigstens eine in der Dicke des Bandes wellenförmige und durchgehende Rille (2, 4) entlang einer ersten Richtung und mehrere in der Dicke des Bandes wellenförmige und durchgehende Rillen (6, 7) entlang einer zweiten Richtung, wobei sich jede dieser durchgehenden wellenförmigen Rillen zwischen einem ersten Niveau, das der Lauffläche im neuen Zustand entspricht, und einem weiteren Niveau in der Dicke des Streifens erstreckt, wobei diese wellenförmigen Rillen mehrere offene Teile (21, 41, 61, 71) auf der Lauffläche (100) im neuen Zustand und mehrere unter der Lauffläche (100) liegende geschlossene Teile (22, 42, 62, 72) umfassen, wobei die geschlossenen Teile mit den offenen Teilen verbunden und abwechselnd angeordnet sind, wobei jeder geschlossene Teil von der Lauffläche im neuen Zustand durch eine Gummibrücke beabstandet ist, wobei die wellenförmigen Rillen (6, 7) entlang der zweiten Richtung mit wenigstens einer wellenförmigen Rille (2, 4) entlang der ersten Richtung verbunden sind,
- auf wenigstens einem zweiten axialen Teil (B) des Streifens wenigstens eine in der Dicke des Bandes wellenförmige und durchgehende Rille (1, 5) entlang einer dritten Richtung und mehrere in der Dicke des Bandes wellenförmige und durchgehende Rillen (6, 7) entlang einer vierten Richtung, wobei jede wellenförmige Rille mehrere offene Teile auf der Lauffläche (100) im neuen Zustand und mehrere geschlossene Teile umfasst, wobei die geschlossenen Teile mit den offenen Teilen verbunden sind, wobei diese offenen und geschlossenen Teile abwechselnd angeordnet sind, wobei jeder geschlossene Teil von der Lauffläche durch eine Gummibrücke beabstandet ist, wobei die wellenförmigen Rillen (6, 7) dieses zweiten axialen Teils (B) des Streifens, die entlang der vierten Richtung ausgerichtet sind, mit wenigstens einer wellenförmigen Rille (1, 5) entlang der dritten Richtung verbunden sind, wobei dieser Laufstreifen (10) **dadurch gekennzeichnet ist, dass**:
- im neuen Zustand die offenen Teile auf der Lauffläche des ersten axialen Teils (M) miteinander verbunden sind, um ein zusammenhängendes Oberflächennetz zu bilden, und dadurch, dass die offenen Teile auf der Lauffläche des zweiten axialen Teils (B) voneinander getrennt sind,
- und dadurch, dass ab einem teilweisen Verschleiß die offenen Teile auf einer neuen Lauffläche (100') des zweiten axialen Teils (B) miteinander verbunden sind, um ein zusammenhängendes Oberflächennetz zu bilden, und dadurch, dass die offenen Teile auf der neuen Lauffläche (100') des ersten axialen Teils (M) voneinander getrennt sind.

2. Laufstreifen (10) nach Anspruch 1, **dadurch gekennzeichnet, dass** der erste axiale Teil (M) auf dem mittleren Teil des Laufstreifens im neuen Zustand ausgebildet ist, und dadurch, dass der zweite axiale Teil den Teilen des Laufstreifens entspricht, die sich beiderseits des mittleren Teils befinden.

3. Laufstreifen (10) nach Anspruch 2, **dadurch gekennzeichnet, dass** die Breite des mittleren Teils (M) zwischen 15 % und 85 % der Breite W des Laufstreifens liegt, und noch vorteilhafter zwischen 30 % und 65 %.

4. Laufstreifen (10) nach Anspruch 1, **dadurch gekennzeichnet, dass** im neuen Zustand der erste axiale Teil auf wenigstens einem der Teile ausgebildet ist, die axial am weitesten von der Mittelebene des Laufstreifens im neuen Zustand entfernt sind, und dadurch, dass der zweite axiale Teil auf dem mittleren Teil des Laufstreifens ausgebildet ist.

5. Laufstreifen nach einem der Ansprüche 1 bis 3, **dadurch gekennzeichnet, dass** die seitlichen Teile (B) mehrere Einschnitte mit derselben Ausrichtung wie die wellenförmigen schrägen Rillen (6, 7) aufweisen, wobei diese Ausrichtung wenigstens gleich 10 Grad ist.

6. Reifen, der mit einem Laufstreifen nach einem der Ansprüche 1 bis 5 versehen ist, wobei dieser Reifen **dadurch gekennzeichnet ist, dass** die mittlere Länge der offenen Teile der wellenförmigen Rillen in Umfangsrichtung auf der Lauffläche im neuen Zustand zwischen 25 % und 75 % der mittleren Länge T der Kontaktfläche des Reifens liegt, die unter den Nutzungsbedingungen des Reifens erhalten wird.

## Claims

1. - Tread (10) for a heavy vehicle tyre of width W, this tread having, when new, a tread surface (100) intended to come into contact with a roadway, this tread comprising:
- over at least a first axial part (M) of the tread at least one wavy groove (2, 4) with waviness in the thickness of the tread and continuous in a first direction and a plurality of wavy grooves (6, 7) with waviness in the thickness of the tread and continuous in a second direction, each of these continuous wavy grooves extending between a first level corresponding to the tread surface when new and another level in the thickness of the tread, these wavy grooves comprising a plurality of open parts (21, 41, 61, 71) opening onto the tread surface (100) when new and a plurality of closed parts (22, 42, 62, 72) underlying the tread surface (100), the closed parts being connected to the open parts and arranged in alternation, each closed part being spaced away from the tread surface when new by a bridge of rubber, the wavy grooves (6, 7) in the second direction being connected to at least one wavy groove (2, 4) in the first direction,
- over at least a second axial part (B) of the tread at least one wavy groove (1, 5) with waviness in the thickness of the tread and continuous in a third direction and a plurality of wavy grooves (6, 7) with waviness in the thickness of the tread and continuous in a fourth direction, each wavy groove comprising a plurality of open parts opening onto the tread surface (100) when new and a plurality of closed parts, the closed parts being connected to the open parts, these open and closed parts being arranged in alternation, each closed part being spaced away from the tread surface by a bridge of rubber, the wavy grooves (6, 7) of this second axial tread part (B) oriented in the fourth direction being connected to at least one wavy groove (1, 5) in the third direction, this tread (10) being **characterized in that**:
- when new, the open parts opening onto the tread surface of the first axial part (M) are connected to one another to form a continuous surface network and **in that** the open parts opening onto the tread surface of the second axial part (B) are disjointed from one another,
- and **in that** beyond a part-wear condition, the open parts opening onto a new tread surface (100') of the second axial part (B) are connected to one another to form a continuous surface network and **in that** the open parts opening onto the new tread surface (100') of the first axial part (M) are disjointed from one another.

2. - Tread (10) according to Claim 1, **characterized in that** the first axial part (M) is formed on the middle part of the tread when new and **in that** the second axial part corresponds to those parts of the tread that are situated on each side of the middle part.

3. - Tread (10) according to Claim 2, **characterized in that** the width of the middle part (M) is comprised between 15% and 85% of the width W of the tread, and more advantageously still, between 30% and 65%.

4. - Tread (10) according to Claim 1, **characterized in that**, when new, the first axial part is formed on at least one of the parts axially furthest from the mid plane of the tread when new and **in that** the second axial part is formed on the middle part of the tread.

5. - Tread according to any one of Claims 1 to 3, **characterized in that** the lateral parts (B) comprise a plurality of sipes with the same orientation as the wavy oblique grooves (6, 7), this orientation being at least equal to 10 degrees.

6. - Tyre provided with a tread according to any one of Claims 1 to 5, this tyre being **characterized in that** the mean length of the open parts of the circumferential wavy grooves opening onto the tread surface when new is comprised between 25% and 75% of the mean length **T** of the contact patch of the tyre that is obtained under the service conditions of the tyre.
